## Europäisches Patentamt

## European Patent Office

## Office européen des brevets

(19)

(11) Publication number: **0 137 502**
**B1**

(12) **EUROPEAN PATENT SPECIFICATION**

(45) Date of publication of patent specification: **07.01.88**

(21) Application number: **84112209.6**

(22) Date of filing: **11.10.84**

(51) Int. Cl.⁴: **B 25 J 11/00,** B 25 J 19/00,
F 03 G 7/06, G 12 B 1/00

(54) Actuator.

(30) Priority: **12.10.83 JP 189292/83**

(43) Date of publication of application:
**17.04.85 Bulletin 85/16**

(45) Publication of the grant of the patent:
**07.01.88 Bulletin 88/01**

(84) Designated Contracting States:
**DE FR GB IT**

(56) References cited:
**EP-A-0 024 433**
**GB-A-1 554 738**

(73) Proprietor: **HITACHI, LTD.**
**6, Kanda Surugadai 4-chome Chiyoda-ku**
**Tokyo 100 (JP)**

(72) Inventor: **Hosoda, Yuji**
**3602, Shimoinayoshi Chiyoda-mura**
**Niihari-gun Ibaraki-ken (JP)**
Inventor: **Kojima, Yoshio**
**Moriyama Apt. 303 3-17-1, Moriyama-cho**
**Hitachi-shi Ibaraki-ken (JP)**
Inventor: **Fujie, Masakatsu**
**531-328, Tagu Ushiku-machi**
**Inashiki-gun Ibaraki-ken (JP)**
Inventor: **Honma, Kazuo**
**3769-21, Ami Ami-machi**
**Inashiki-gun Ibaraki-ken (JP)**
Inventor: **Iwamoto, Taro**
**433-47, Yonezawa-cho**
**Mito-shi Ibaraki-ken (JP)**
Inventor: **Nakano, Yoshiyuki**
**1-10-5, Nishinarusawa-cho**
**Hitachi-shi Ibaraki-ken (JP)**
Inventor: **Kamejima, Kohji**
**Tsukuba House 7-203 2625-3, Shimoinayoshi**
**Chiyoda-mura Niihari-gun Ibaraki-ken (JP)**

Courier Press, Leamington Spa, England.

**0 137 502**

(74) Representative: **Patentanwälte Beetz sen. -
Beetz jun. Timpe - Siegfried - Schmitt-Fumian
Steinsdorfstrasse 10
D-8000 München 22 (DE)**

## Description

### Background of the Invention

The present invention relates to an actuator of the kind referred to in the pre-characterizing portion of patent claim 1. Such an actuator is known from GB—A—1,554,738.

In an actuator of this kind for driving a load and in which a shape memory material is employed disclosed in GB—A—1,554,738 a shape memory material in the shape of a coil spring and a spring which imparts a deformation thereto are usually arranged in alignment, and a position is controlled by a balance between the reaction of the spring and the reaction of the shape memory material that changes with temperature. To construct an actuator which produces a large output, however, it is necessary to employ a shape memory material with a large wire diameter. This, however, results in a reduced heat-radiating performance of the shape memory material, and makes it difficult to increase the operating speed of the actuator in a cooling step.

### Summary of the Invention

The object of the present invention is to improve an actuator of the kind known from GB—A—1,554,738 such that it enables a shape memory material to exhibit a good heat-radiating performance, so that it can operate at high speed.

This object is achieved with an actuator according to claim 1.

Features of preferred embodiments are claimed in the dependent claims 2—7.

Other objects and advantages of the invention will become obvious from the embodiments thereof described below.

### Brief Description of the Drawings

Fig. 1 is a vertical section through the structure of an actuator according to an embodiment of the present invention; and

Figs. 2 to 7 are diagrams of actuators according to other embodiments of the present invention.

### Detailed Description of the Preferred Embodiments

Embodiments of the present invention will be described below in conjunction with the drawings.

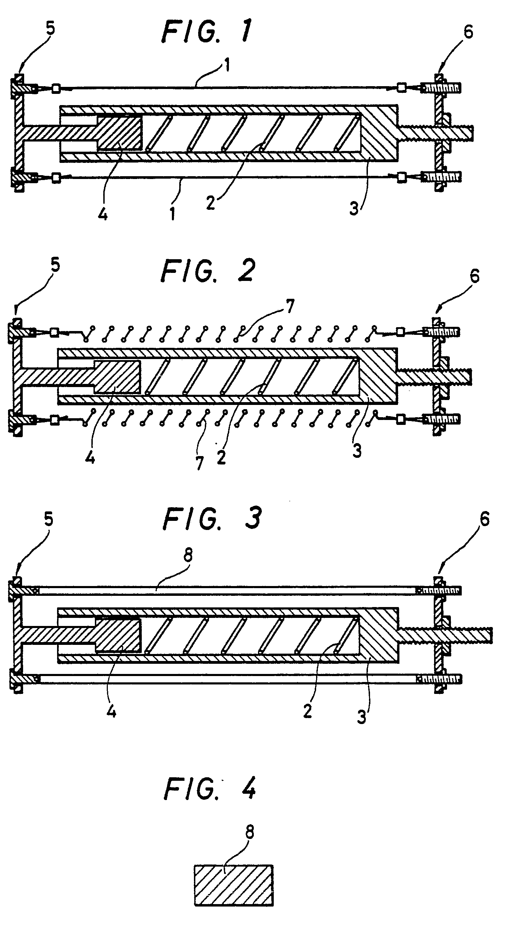

Fig. 1 shows the structure of an actuator according to an embodiment of the present invention. The actuator comprises a drive portion consisting of linear shape memory materials 1 composed of nickel, titanium or the like, a resilient member 2 which imparts deformation to the shape memory materials 1, a guide 3 securing the resilient member 2, and a piston 4 which slides according to the balance between the reaction of the shape memory materials 1 and the reaction of the resilient member 2. A plurality of the shape memory materials 1 are arranged in parallel around the periphery of the guide 3 between a movable member 5 at one end of a piston and a stationary member 6, so as to surround the resilient member 2. The rigidity of the shape memory materials 1 changes with the heat produced when an electric current is supplied from a power source (not shown) connected to end portions thereof.

With this structure, therefore, if the temperature of the shape memory materials 1 changes, the balance relative to the reaction of the resilient member 2 changes, and the position of the movable member 5 can be controlled.

According to this embodiment, a large number of thin shape memory materials 1 can be employed, making it possible to construct an actuator which features a large output, a good heat-radiating performance, and high-speed operation.

Figs. 2 to 7 illustrate actuators according to other embodiments of the present invention, wherein the same reference numerals as those of Fig. 1 denote identical portions.

According to an embodiment shown in Fig. 2, the drive portion consists of a plurality of shape memory materials 7 shaped as coil springs which are arranged in parallel. With this structure, the magnitude of the deformation can be increased, and an actuator which features a good heat-radiating performance and a large stroke can be obtained.

According to an embodiment shown in Fig. 3, the drive portion consists of shape memory materials 8 which have a rectangular cross-section, shown in Fig. 4, a plurality of the shape memory materials 8 being arranged in parallel. With this structure, the surface area of the shape memory materials can be increased per unit volume, and the heat-radiating performance can be further increased.

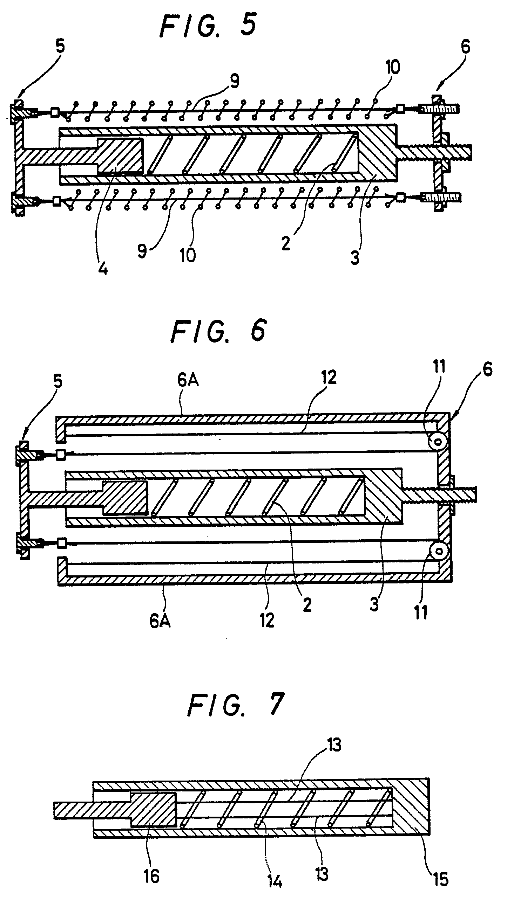

According to an embodiment shown in Fig. 5, linear shape memory materials 9 are each arranged within a shape memory material 10 in the shape of a coil spring. With this structure, the density of the shape memory materials can be increased to obtain a large output. In this embodiment, furthermore, it is obvious that the shape memory materials arranged within the shape memory materials 10 of the coil spring shape can have any cross-sectional shape, such as a rectangular shape, or a coil spring shape, etc.

According to an embodiment shown in Fig. 6, the stationary member 6 is provided with a holding member 6A which extends toward the movable member 5, pulleys 11 are provided on the inner side of the stationary member 6, one end of each of shape memory materials 12 is connected to the movable member 5 side, and the other ends thereof are connected to the end of the holding member 6A, after passing over the corresponding pulleys 11. This embodiment produces a stroke which is twice that of the embodiment of Fig. 1. In this embodiment, if the number of pulleys 11 is increased, the actuator produces a larger stroke.

An embodiment shown in Fig. 7 consists of linear shape memory materials 13, a resilient member 14, a guide 15 to which the resilient member 14 is attached, and a piston 16 which slides according to the balance between the reaction of the shape memory materials 13 and the reaction of the resilient member 14. This embodiment provides a compact actuator which is not affected much by changes in the temperature of the atmosphere.

According to the present invention, a plurality of shape memory materials are arranged in parallel, so that the surface area per unit volume of the shape memory materials is increased. Therefore it is possible to provide an actuator which features a good heat-radiating performance and high-speed operation.

**Claims**

1. An actuator employing shape memory materials as a drive source, the actuator including a stationary member (6), a movable member (5) which can move relative to said stationary member, and a resilient member (2), said resilient member (2) being arranged between said movable member (5) and said stationary member (6), which imparts a deformation to the shape memory materials (1; 7; 8; 9; 12; 13) which act as a drive portion, characterized in that a plurality of shape memory materials are arranged in parallel between said movable member and said stationary member such that the surface area per unit volume of the shape memory materials is increased, and in that an electrical power source is connected to the end portions of said shape memory materials.

2. The actuator according to claim 1, wherein said shape memory materials (1) are arranged around the outer periphery of said resilient member (2), in the lengthwise direction thereof.

3. The actuator according to claim 1, wherein said shape memory materials (13) are arranged within said resilient material (14), which has the shape of a coil, in the lengthwise direction thereof (Fig. 7).

4. The actuator according to claim 1 or 2, wherein said shape memory materials (1; 8; 12; 13) have a linear shape.

5. The actuator according to claim 1 or 2, wherein said shape memory materials (7; 9) have the shape of a coil.

6. The actuator according to claim 2, wherein said stationary member (6) is provided with a holding member (6A) which extends nearly as far as said movable member (5), pulleys (11) are mounted on the inner side of said stationary member (6), one end of each of said shape member materials (12) is connected to said movable member (5), and the other end of each of said shape memory materials is connected to the extended end (6A) of said holding member (6), after passing over one of said pulleys (11) (Fig. 6).

7. The actuator according to claim 6, wherein said shape memory materials (12) have a linear shape.

**Patentansprüche**

1. Betätigungsvorrichtung mit Formspeichermaterialien als Antriebsquelle, wobei die Betätigungsvorrichtung ein stationäres Element (6), ein gegenüber dem stationären Element bewegliches Element (5) und ein Federelement (2) aufweist, das zwischen dem beweglichen Element (5) und dem stationären Element (6) angeordnet ist und eine Deformierung der Formspeichermaterialien (1; 7; 8; 9; 12; 13) bewirkt, welche als Antriebsteil dienen, dadurch gekennzeichnet, daß eine Vielzahl von Formspeichermaterialien parallel zwischen dem beweglichen und dem stationären Element so angeordnet ist, daß sich die Oberfläche je Volumeneinheit des Formspeichermaterials vergrößert, und daß eine elektrische Stromquelle an die Endabschnitte der Formspeichermaterialien angeschlossen ist.

2. Betätigungsvorrichtung nach Anspruch 1, dadurch gekennzeichnet, daß die Formspeichermaterialien (1) um den Außenumfang des Federelements (2) in Längsrichtung zu diesem angeordnet sind.

3. Betätigungsvorrichtung nach Anspruch 1, dadurch gekennzeichnet, daß die Formspeichermaterialien (13) innerhalb des federnden Materials (14) in Längsrichtung zu diesem angeordnet sind, wobei das Material spiralförmig ausgebildet ist (Fig. 7).

4. Betätigungsvorrichtung nach Anspruch 1 oder 2, dadurch gekennzeichnet, daß die Formspeichermaterialien (1; 8; 12; 13) eine lineare Form aufweisen.

5. Betätigungsvorrichtung nach Anspruch 1 oder 2, dadurch gekennzeichnet, daß die Formspeichermaterialien (7; 9) spiralförmig ausgebildet sind.

6. Betätigungsvorrichtung nach Anspruch 1, dadurch gekennzeichnet, daß das stationäre Element (6) mit einem Halteelement (6A) versehen ist, welches sich in die unmittelbare Nähe des beweglichen Elementes (5) erstreckt, Rollen (11) an der Innenseite des stationären Elementes (6) befestigt sind, ein Ende jedes der Formspeichermaterialien (12) mit dem beweglichen Element (5) verbunden und das andere Ende jedes der Formspeichermaterialien nach erfolgtem Umlauf um eine der Rollen (11) (Fig. 6) mit dem verlängerten Ende (6A) des Halteelements (6) verbunden ist.

7. Betätigungsvorrichtung nach Anspruch 6, dadurch gekennzeichnet, daß die Formspeichermaterialien (12) linear ausgebildet sind.

**Revendications**

1. Actionneur utilisant des matériaux présentant une mémoire de forme en tant que source d'entraînement, cet actionneur comprenant un organe fixe (6), un organe mobile (5) qui peut se déplacer par rapport audit organe fixe, et un organe élastique (2), ledit organe élastique (2) étant disposé entre ledit organe mobile (5) et ledit organe fixe (6) et appliquant une déformation aux matériaux à mémoire de forme (1; 7; 8; 9; 12; 13), qui agissent en tant qu'élément d'entraînement, caractérisé en ce qu'une pluralité de matériaux à mémoire de forme sont disposés parallèlement entre ledit organe mobile et ledit organe fixe de telle sorte que la surface par unité de volume des matériaux à mémoire de forme est accrue, et qu'une source d'alimentation en énergie électrique est raccordée aux parties terminales desdits matériaux à mémoire de forme.

2. Actionneur selon la revendication 1, dans lequel lesdits matériaux à mémoire de forme (1) sont disposés autour du pourtour extérieur dudit organe élastique (2), dans la direction longitudinale de ce dernier.

3. Actionneur selon la revendication 1, dans lequel lesdits matériaux à mémoire de forme (13) sont disposés à l'intérieur dudit matériau élastique (14), qui possède la forme d'une bobine, dans la direction longitudinale de ce matériau (figure 7).

4. Actionneur selon la revendication 1 ou 2, dans lequel lesdits matériaux à mémoire de forme (1; 8; 12; 13) possèdent une forme linéaire.

5. Actionneur selon la revendication 1 ou 2, dans lequel lesdits matériaux à mémoire de forme (7; 9) possèdent la forme d'une bobine.

6. Actionneur selon la revendication 2, dans lequel ledit organe fixe (6) comporte un organe de maintien (6a) qui s'étend presque sur la même étendue que ledit organe mobile (5), des poulies (11) sont montées sur le côté intérieur dudit organe fixe (6), une extrémité de chacun desdits matériaux à mémoire de forme (12) est raccordée audit organe mobile (5), et l'autre extrémité de chacun desdits matériaux à mémoire de forme est raccordée à l'extrémité étendue (6A) dudit organe de maintien (6), après son passage autour de l'une desdites poulies (11) (figure 6).

7. Actionneur selon la revendication 6, dans lequel lesdits matériaux à mémoire de forme (12) possèdent une forme linéaire.

FIG. 1

FIG. 2

FIG. 3

FIG. 4

# FIG. 5

# FIG. 6

# FIG. 7